(19) Europäisches Patentamt / European Patent Office / Office européen des brevets

(11) **EP 2 525 180 B1**

(12) **EUROPÄISCHE PATENTSCHRIFT**

(45) Veröffentlichungstag und Bekanntmachung des Hinweises auf die Patenterteilung:
**22.10.2014 Patentblatt 2014/43**

(51) Int Cl.:
*F28D 1/04* *(2006.01)*       *F28F 1/02* *(2006.01)*
*F28F 1/14* *(2006.01)*       *B01L 7/00* *(2006.01)*
*B64G 7/00* *(2006.01)*

(21) Anmeldenummer: **11166165.8**

(22) Anmeldetag: **16.05.2011**

(54) **Temperieranordnung und -verfahren zur Erzeugung eines gleichförmigen Temperaturverlaufs auf einer Oberfläche**

Tempering assembly and method for generating a constant temperature profile on a surface

Agencement et procédé de thermorégulation pour la production d'un déroulement de température à forme égale sur une surface

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**21.11.2012 Patentblatt 2012/47**

(73) Patentinhaber: **Harmann, Hans-Peter**
**88131 Lindau (DE)**

(72) Erfinder: **Harmann, Hans-Peter**
**88131 Lindau (DE)**

(74) Vertreter: **Harmann, Bernd-Günther**
**Kaminski Harmann**
**Patentanwälte AG**
**Landstrasse 124**
**9490 Vaduz (LI)**

(56) Entgegenhaltungen:
**WO-A1-98/57740     WO-A2-2007/106823**
**DD-A1- 241 864**

**Beschreibung**

Die Erfindung betrifft eine Temperieranordnung zur Erzeugung eines gleichförmigen Temperaturverlaufs auf einer Oberfläche nach dem Oberbegriff von Anspruch 1 und ein ebensolches Temperierverfahren nach dem Oberbegriff des Anspruchs 12. Eine Anordnung gemäß dem Oberbegriff des Patentanspruchs 1 ist aus der DD 241 864 bekannt.

In vielen Technologiegebieten besteht das Bedürfnis nach Erzeugung einer Oberfläche mit einer möglichst homogenen, thermisch strukturfreien Temperaturverteilung. Beispiele hierfür sind thermische Verfahren, bei denen Werkstoffe möglichst spannungsfrei und ohne auftretende innere thermische Differenzen wärmebehandelt oder gekühlt werden müssen. Andere Anwendungsgebiete stellen Meßanwendungen dar, bei denen ein thermisch gleichförmiger Hintergrund bzw. eine ebensolche Umgebung bereitgestellt werden sollen, wie z.B. in Kammern zur Simulation von Weltraumbedingungen.

Für die Anwendung als Thermalwand in Raumfahrtsimulatoren ist insbesondere der Temperaturbereich zwischen -200°C und +150°C interessant. Abweichungen der lokalen Oberflächentemperatur von der mittleren Oberflächentemperatur sollen dabei im stationären Zustand kleiner als +/-2°C (vorteilhaft +/-1°C) sein.

Dementsprechend sind die zu erzeugenden Temperaturen bzw. Temperaturdifferenzen zur Umgebung je nach Anwendungszweck unterschiedlich. In Abhängigkeit von der Aufgabenstellung kann es hierbei zur Erzeugung des thermischen Soll-Hintergrundes erforderlich sein, die betreffende Oberfläche zu kühlen oder zu heizen, in einigen Fällen sind beide Vorgänge auch zu kombinieren. Die Erzeugung eines möglichst homogenen Bereichs mit einer vorgegebenen Temperatur wird daher im folgenden als Temperierung bezeichnet, wobei dieser Begriff als zielgerichteter Wärmetransport sowohl Temperaturveränderung als auch gesteuerte oder geregelte Aufrechterhaltung einer Solltemperatur beinhaltet.

Aus dem Stand der Technik ist eine Vielzahl von Ansätzen bekannt, die ein hohes Ausmaß an Wärmetransport mit einer möglichst gleichförmigen Temperierwirkung verbinden sollen. Hierbei verwenden bestehende Lösungen typischerweise mediendurchflossene Kühlkanäle, die wärmeleitend mit dem zu temperierenden Körper verbunden sind.

So ist aus der DD 241 864 eine Halbkugelschale mit Kühlanordnung bekannt, bei der Kühlkanäle in Form einer spiralförmigen Kühlschlange auf dem Körper angeordnet sind. Das Kühlmedium tritt an einer Seite des Körpers in den Kanal ein, durchläuft die Schlange und tritt am entgegengesetzten Ende aus. Dabei nimmt das Kühlmedium die abzuführende Wärmemenge auf. Die Temperaturspreizung über den Körper ist somit mindestens so groß wie die Temperaturdifferenz des Kühlmediums zwischen Einlaß und Auslaß. Ein weiteres Beispiel für eine flächige Kühlung mit Gegenstromprinzip, bei dem eine Verbesserung erzielt wird, ist ebenfalls in der DD 241 864 beschrieben. Hierzu wird auf einem flächigen Körper ein mäanderförmiger Kühlkanal aufgebracht. Dieser deckt die Fläche gut ab und hat Bereiche mit Gegenströmungen, die eine Homogenisierung begünstigen. Wie auch bereits hinsichtlich der Halbkugelschalenanordnung gilt hier, daß die Temperaturspreizung mindestens die Differenz zwischen Medientemperatur an Einlaß und Auslaß beträgt. Diese Differenz hängt von der aufgenommenen Wärmeleistung und den Eigenschaften des Kühlmedienflusses ab.

Im Gleichgewichtszustand gilt allgemein:

$$\int p\, dF = C * I * \Delta T \qquad\qquad (1)$$

wobei p die Flächenleistungsdichte, dF ein Flächenelement, C die Wärmekapazität des Mediums, I den Mediendurchfluß und ∆ T die Temperaturdifferenz zwischen Einlaß und Auslaß bezeichnen. In diesem Ansatz wird die gesamte eingetragene Leistung über das Kühlmedium abgeführt, wobei die Kühlleistung des Mediums durch Durchfluß, Kapazität und Temperaturspreizung gegeben ist.

Für alle Lösungen mit Kühlkanälen gilt, daß die lokale Temperatur des Kühlkanals das lokale Temperaturfeld der zu temperierenden Oberfläche dominiert. Hierbei ist es offensichtlich, daß eine Differenz des Kühlkanals entlang der Strömung zu einer Temperaturdifferenz in der Oberfläche führt.

Bisherige Lösungen verfolgen zwei Ansätze die Differenz zu reduzieren.

a) Durch Verwendung geeigneter Kühlmedien mit großer Wärmekapazität C und durch Erhöhung des Durchflusses I wird die Temperaturdifferenz zwischen Einlaß und Auslaß bei gegebenem Gesamtleistungseintrag reduziert.

b) Auf der zu temperierenden Oberfläche werden Heizelemente aufgebracht und durch kontrolliertes, lokales Gegenheizen die Temperaturdifferenz reduziert. Dieses Verfahren ist nur geeignet um lokal unterschiedlichen Leistungseintrag auszugleichen und diese zusätzliche Inhomogenität zu reduzieren. An der Spreizung durch die Temperaturdifferenz zwischen Einlaß und Auslaß des Kühlmediums ändert dies jedoch nichts. Somit bleiben im Stand der Technik die durch die Kühl- oder Heizstromführung resultierenden Temperaturunterschiede eine Quelle thermischer Signaturen und Inhomogenitäten in der zu temperierenden Oberfläche.

Gewünscht ist jedoch eine Oberfläche eines Körpers, z.B. eine Thermalwand in einer Testanlage für Raumfahrtausrüstung, die durch Kühlung oder Heizung eine möglichst homogene Temperaturverteilung aufweisen soll. Diese homogene Temperaturverteilung soll dabei auch dann gewährleistet sein, wenn ein Leistungseintrag, sei er intern oder extern bedingt, in den Körper vorliegt.

Eine Aufgabe der vorliegenden Erfindung besteht somit in der Bereitstellung einer verbesserten Temperieranordnung bzw. eines ebensolchen Verfahrens.

Eine weitere Aufgabe besteht in der Bereitstellung einer solchen Temperieranordnung bzw. eines Temperierverfahrens mit minimalen thermischen Inhomogenitäten auf der zu temperierenden Oberfläche, insbesondere mit minimalen Temperaturspreizungen in und/oder senkrecht zur Wärmetransportrichtung.

Diese Aufgaben werden durch die Gegenstände des Anspruchs 1 bzw. 12 oder der abhängigen Ansprüche gelöst bzw. die Lösungen weitergebildet.

Die Erfindung betrifft eine Temperieranordnung zur Erzeugung eines gleichförmigen Temperaturverlaufs auf einer Oberfläche und ein ebensolches Temperierverfahren, wobei sich die Erfindung in mehrere Teilaufgaben bzw. Teillösungen unterteilt

1. Homogenität entlang des Kühlkanals,

2. Homogenität quer zum Kühlkanal und

3. Toleranz gegenüber (wechselnden) Temperaturdifferenzen zwischen Einlaß und Auslaß des Kühlmediums, d.h. gegenüber sich änderndem Gesamtleistungseintrag in den zu temperierenden Körper.

Die nachfolgenden Lösungen beziehen sich dabei nicht ausschließlich auf mediendurchflossene Kühlkanäle. Diese werden nur als Beispiel zur Verdeutlichung angeführt und spielen in der Zielanwendung "Testanlage" eine besondere Rolle. Statt der Kühlkanäle können verallgemeinert zumindest in einer (Vorzugs-)Richtung ausgedehnten Temperierelementen erfindungsgemäss verwendet werden. Dabei ist es gleichgültig, ob die Temperierung durch ein Kühlmedium, durch elektrischen Strom, eine Phasenumwandlung, eine chemische Reaktion oder durch einen sonstigen geeigneten Prozeß zustande kommt, solange nur ein erfindungsgemäss nutzbarer Wärmetransportmechanismus | bewirkt wird. Für die Aufgabenstellung und die erfindungsgemässe Lösung ist relevant, daß entlang der Vorzugsrichtung ein Temperaturgradient auftritt. Dies ist bei Verwendung von Wärmetransportmedien typischerweise der Fall.

Eine homogene Temperatur entlang einer Vorzugsrichtung in der Temperieranordnung kann dadurch erzielt werden, daß zwei Temperierelemente so angeordnet werden, daß der Temperaturgradient antiparallel verläuft. Die Vorzugsrichtung wird hierbei in den meisten Fällen mit der Wärmetransportrichtung zusammenfallen, wobei der Wärmestrom und damit der Transport zur Homogenisierung entgegengesetzt erfolgt. Beide Temperierelemente als Wärmetransportkomponenten sind entlang der Vorzugsrichtung durch eine Wärmebrücke verbunden, so dass im Betriebszustand zwischen den Temperierelementen an Punkten entlang der Vorzugsrichtung, insbesondere aber kontinuierlich, ein Temperaturgradient und damit ein Wärmetransport zwischen den Temperierelementen auftritt. Als eine solche Wärmebrücke soll in diesem Zusammenhang jede Verbindung zwischen den Temperierelementen als Transportkomponenten verstanden werden, die nicht deren integraler bzw. funktionaler Bestandteil ist. Naturgemäss kann eine Wärmebrücke aber strukturell mit den Temperierelementen und deren Bestandteilen verbunden sein, insbesondere einstückig mit diesen ausgeführt sein.

Entlang der Ausdehnung der Temperierelemente stellt sich dann in der Wärmebrücke eine Isotherme als Linie konstanter Temperatur ein. Diese wird in ihrer Lage und ihrer Form abhängig von der Temperaturdifferenz wie auch der strukturellen und geometrischen Ausgestaltung der Temperierelemente sein. Bei symmetrischer Anordnung identischer Temperierelemente und identischen Temperaturdifferenzen liegt die Isotherme in der Mitte der Wärmebrücke und erstreckt sich entlang der Temperierelemente über die gesamte Anordnung. Die Isotherme stellt die Linie der wärmeleitenden Anbindung an den zu temperierende Körper bzw. dessen zu temperierende Oberfläche dar.

Die Nutzung der Erfindung ist insbesondere dann vorteilhaft, wenn innerhalb der wenigstens zwei Temperierelemente eine große Temperaturdifferenz nicht zu vermeiden ist. Dies ist insbesondere der Fall, wenn Gase als Kühlmedium eingesetzt werden. Ebenfalls vorteilhaft ist der Einsatz, wenn die Solltemperatur der zu temperierenden Oberfläche stark von der Temperatur des Kühlmediums abweicht. Dies ist der Fall, wenn ein Kühlmedium mit Phasenübergang eingesetzt wird (z.B. Flüssigstickstoff), die Solltemperatur aber von der Phasenübergangstemperatur abweicht. Bevorzugte Werkstoffe zur Ausführung von zu temperierendem Körper wie auch der Temperierelemente sind insbesondere Aluminium (insbesondere Aluminium Strangpreßprofile), Kupfer, Edelstahl, Graphit und Verbundwerkstoffe z.B. auf Basis von Kohlefaser.

Eine Homogenisierung quer zum Kühlkanal bzw. zur Vorzugsrichtung kann durch die Verwendung einer weiteren Wärmebrücke erreicht werden, welche einen ausgleichenden und damit homogenisierenden Effekt bewirkt. Diese zweite Wärmebrücke wird mit der ersten Wärmebrücke entlang der sich dort im Betriebszustand ausbildenden Isothermen verbunden und somit auf konstantem Temperaturniveau kontaktiert. Durch eine geometrische oder materialseitige Gestaltung der zweiten Wärmebrücke kann der Wärmetransport homogenisiert werden, so dass ein strukturfreies und gleichmässiges Temperaturprofil auf der Oberfläche entsteht.

Beide Homogenisierungen, wie auch die Toleranz gegenüber wechselnden Temperaturdifferenzen sowie konkrete Ausführungsbeispiele der erfindungsgemässen Temperieranordnung, werden nachfolgend anhand von in der Zeichnung schematisch oder figürlich dargestellten Beispielen näher beschrieben oder erläutert. Im einzelnen zeigen

Fig.1    die schematische Darstellung der Dominierung einer Zone einer zu kühlenden Oberfläche durch die lokale Temperatur;

Fig.2    die schematische Darstellung der erfindungsgemässen Verwirklichung einer homogenen Temperatur entlang der Temperierelemente bei überlappenden Temperaturbereichen;

Fig.3    die schematische Darstellung der erfindungsgemässen Verwirklichung einer homogenen Temperatur entlang der Temperierelemente bei nicht überlappenden Temperaturbereichen;

Fig.4    die schematische Darstellung der erfindungsgemässen Verwirklichung einer homogenen Temperatur entlang der Temperierelemente bei identischen Temperaturdifferenzen in beiden Richtungen;

Fig.5    die schematische Darstellung der erfindungsgemässen Verwirklichung einer homogenen Temperatur entlang der Temperierelemente bei identischen Temperaturdifferenzen in beiden Richtungen und einer Kühlmittel-Rückführung;

Fig.6    die schematische Darstellung der erfindungsgemässen Verwirklichung der Homogenisierung der Temperatur senkrecht zur Isothermen;

Fig.7    die schematische Darstellung der erfindungsgemässen Verwirklichung der Homogenisierung der Temperatur senkrecht zur Isothermen bei anisotroper Wärmeleitung;

Fig.8    die figürliche Darstellung eines ersten Ausführungsbeispiels einer erfindungsgemässen Temperieranordnung;

Fig.9    die figürliche Darstellung eines zweiten Ausführungsbeispiels einer erfindungsgemässen Temperieranordnung;

Fig.10    die figürliche Darstellung eines dritten Ausführungsbeispiels einer erfindungsgemässen Temperieranordnung;

Fig.11    die figürliche Darstellung eines vierten Ausführungsbeispiels einer erfindungsgemässen Temperieranordnung und

Fig.12    die figürliche Darstellung eines fünften Ausführungsbeispiels einer erfindungsgemässen Temperieranordnung.

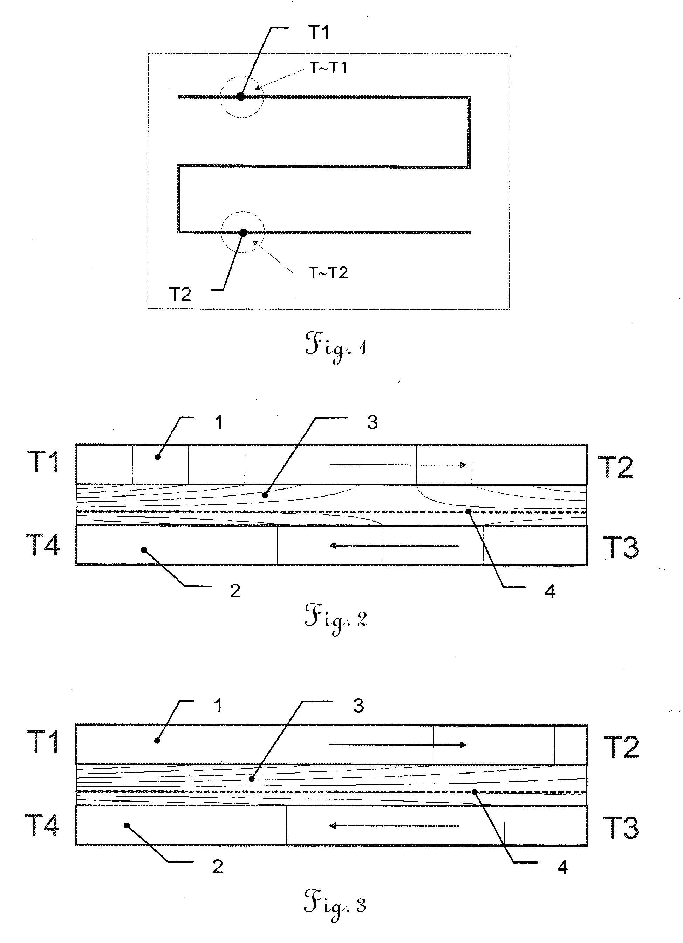

Fig.1 zeigt die schematische Darstellung der Dominierung einer Zone einer zu kühlenden Oberfläche durch die lokale Temperatur. Bei einem in diesem Beispiel mäanderförmig geführten Kühlkanal weisen dessen einzelne Punkt jeweils eine individuelle Temperatur auf, die hier durch die beiden Punkte mit der den Temperaturen T1 und T2 veranschaulicht werden. Für jeden der beiden Punkte existiert dann eine Zone bzw. lokales Temperaturfeld, innerhalb derer die Temperatur ungefähr der lokalen Temperatur des Kühlkanals entspricht. Durch die Abfolge der unterschiedlichen Temperaturen entlang des Temperaturgradienten im Kühlkanal entsteht somit eine Folge oder Spur von Temperaturpunkten mit einer von der Ein- und Austrittstemperatur im Kühlkanal abhängigen thermalen Spreizung. Für alle Lösungen mit solchen Kühlkanälen gilt, daß die lokale Temperatur des Kühlkanals das lokale Temperaturfeld der zu temperierenden Oberfläche dominiert, wobei sich die lokalen Temperaturfelder wiederum voneinander unterscheiden und die Differenz des Kühlkanals entlang der Strömung zu einer Temperaturdifferenz in der Oberfläche führt. Bisherige Lösungen des Stands der Technik versuchen diese Temperaturdifferenz zu verringern, indem die thermische Differenz im Kühlkanal verringert und/oder der Durchsatz bzw. die Wärmekapazität des Kühlmittels erhöht werden. Beide Ansätze sind in ihrer Realisierung jedoch begrenzt und lösen das Problem einer thermischen Spreizung nicht grundsätzlich.

Die erfindungsgemässe Verwirklichung einer homogenen Temperatur entlang der Temperierelemente bei überlappenden Temperaturbereichen zeigt Fig.2 in schematischer Darstellung. In einer Temperieranordnung zur Erzeugung eines gleichmäßigen Temperaturverlaufs auf einer Oberfläche sind ein erstes Temperierelement 1 und ein zweites Temperierelement 2 entlang einer Vorzugsrichtung ausgedehnt und angeordnet. Diese Temperierelemente 1 und 2 können insbesondere als Kanäle zur Führung von Kühl- oder Heizmedien ausgebildet sein, wobei die Vorzugsrichtung bzw. Vorzugsachse mit der Richtung des Wärmetransportes übereinstimmt und diese naturgemäss auch gekrümmt oder in anderer Form ausgestaltet sein können.

Zur Wärmeleitung von oder zu einem die Oberfläche aufweisenden und zu temperierenden Körper sind die Temperierelemente entlang der Vorzugsrichtung mit einer ersten Wärmebrücke 3 verbunden. Entlang der Vorzugsrichtung ist ein Temperaturgradient gegeben, der in der ersten Wärmebrücke 3 zu einer Ausbildung eines Temperaturverlaufes mit einer Vielzahl von Isothermen als Linien gleicher Temperatur führt. Erfindungsgemäss sind die Temperierelemente 1 und 2 so angeordnet und durch die erste Wärmebrücke 3 verbunden sind, dass sich im Betriebszustand zumindest eine Kontakt-Isotherme 4 ausbildet, welche entlang der ersten Wärmebrücke 3 verläuft und entlang derer der zu temperierende Körper mit der ersten Wärmebrücke verbunden ist. Diese Verbindung kann dabei an einzelnen wärmleitenden Punkten gegeben sein, vorzugsweise erfolgt die Verbindung jedoch kontinuierlich entlang der Kontakt-Isothermen 4, so dass eine mit der ersten Wärmebrücke 3 verbundene Struktur diese überall an Punkten gleicher Temperatur kontaktiert. Aufgrund der erfindungsgemässen Ausgestaltung der Anordnung wird im Betriebszustand in den Temperierelementen 1 und 2 ein Wärmestrom so erzeugt, dass sich entlang der Verbindungslinie die gewünschte Kontakt-Isotherme 4 ausbildet. Die genaue Lage der zur Kontaktierung genutzten Kontakt-Isothermen 4 ist von einer Vielzahl von Parametern abhängig, wie z.B. den Materialeigenschaften und den Temperaturgradienten in den Temperierelementen 1 und 2.

Die hier in Fig.2 exemplarisch gezeigte Möglichkeit des Betriebs besteht darin, dass die Temperierelemente 1 und 2 so angeordnet sind, dass die in den Temperierelementen im Betriebszustand entstehenden Temperaturgradienten antiparallel verlaufen, wobei die Temperierelemente 1 und 2 zum Wärmetransport nach einer Vielzahl von möglichen | Prinzipien des Wärmetransportes bzw. der Wärmezu- oder - abfuhr ausgebildet sein können, z.B. durch Transport eines Kühl- oder Heizmediums, insbesondere eines fliessfähiges Mediums, Transport durch elektrischen Strom, kontinuierlich oder diskontinuierliche erfolgende Phasenumwandlungen oder endo- oder exotherme chemische Reaktionen.

Obwohl der zu temperierende Körper mit den Temperierelementen 1 und 2 an einer Vielzahl von Punkten verbunden sein kann, z.B. aus Gründen der mechanischen Stabilität, so besitzt eine ausschliesslich entlang der Kontakt-Isotherme 4 der Wärmebrücke 3 erfolgenden Verbindung den Vorteil einer ausschliesslichen Kontaktierung an Punkten gleicher Temperatur.

In der Fig.2 ist die Temperaturverteilung rein exemplarisch wie folgt gegeben T2>T1; T4>T3; T2-T1>T4-T3 und T2=T4. In diesem dargestellten Fall mit gegenläufigen Temperaturgradienten findet sich die Kontakt-Isotherme 4 (dick gestrichelt) auf der Wärmebrücke 3, die auch geometrisch innerhalb dieser Wärmebrücke 3 verläuft und diese in einen am ersten Temperierelement 1 und einen näher am zweiten Temperierelement 2 gelegenen Bereich aufteilt. Die genaue Lage dieser Kontakt-Isotherme 4 hängt dabei bei fester Geometrie und Materialeigenschaften, d.h. bspw. der Wärmeübergänge und der Leitfähigkeit, nur vom Quotienten der Temperaturdifferenz ab. Eine erfindungsgemässe Temperieranordnung wird daher innerhalb eines vorgegebenen Parametersatzes bzw. -bereichs betrieben.

Der Fall, dass sich der Temperaturbereich entlang der Temperierelemente 1 und 2 nicht überlappt wird in Fig. 3 schematisch dargestellt. In diesem Beispiel gelten die folgenden Bedingungen: T2>T1, T4>T3, T3>T2, jedoch mit Q=(T2-T1) /T4-T3), so dass die Kontakt-Isotherme 4 die gleiche Lage wie in Fig.2 besitzt.

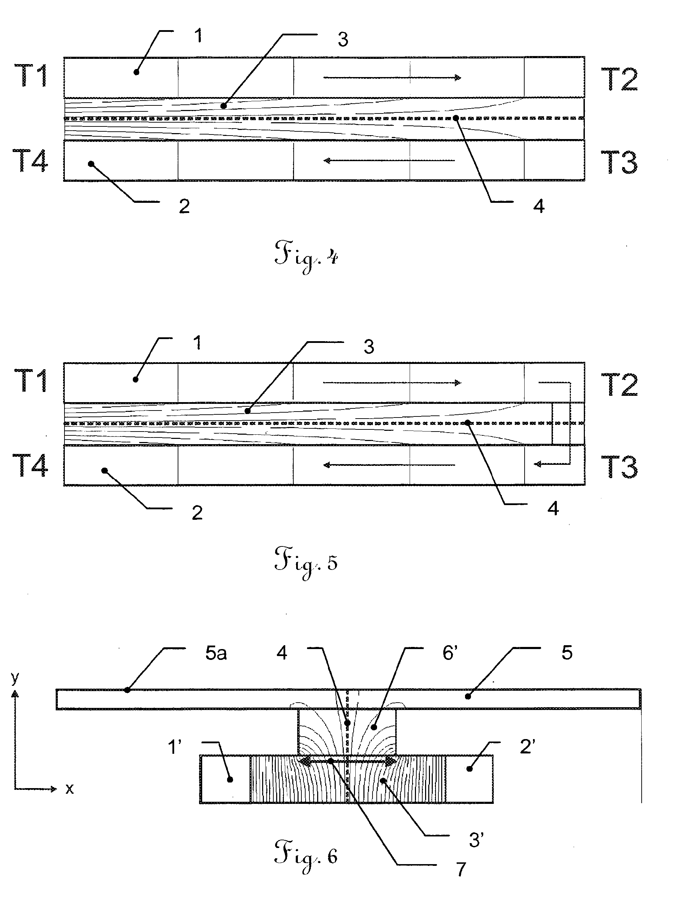

Unter Annahme einer symmetrischen Ankopplung, d.h. die Wärmeübergänge des ersten Temperierelementes 1 zur Wärmebrücke 3 sind gleich den Wärmeübergängen des zweiten Temperierelementes 2 zur Wärmebrücke 3, ergibt sich ein besonders günstiger Fall bei Q=1. Dabei liegt die Kontakt-Isotherme 4 auf der Symmetrieachse(-fläche), wie dies in Fig.4 für eine homogene Temperaturverteilung entlang der Temperierelemente bei identischen Temperaturdifferenzen in beiden Richtungen dargestellt ist.

Besonders vorteilhaft kann die Temperieranordnung ausgeführt werden, wenn T2=T3 gehalten wird. Dies kann beispielsweise erreicht werden, indem bei mediengekühlter Ausführung der Temperierelemente 1 und 2 das gleiche Kühlmittel durch beide Kanäle geführt wird, was in Fig.5 schematisch dargestellt wird. Durch eine solche Kühlmittel-Rückführung kann eine erfindungsgemässe Verwirklichung einer homogenen Temperatur entlang der Temperierelemente 1 und 2 bei identischen Temperaturdifferenzen in beiden Richtungen gewährleistet. Die Temperierelemente 1 und 2 sind somit miteinander verbunden und weisen einen gemeinsamen, aufeinanderfolgend durch beide Temperierelemente geführten Wärmestrom auf.

Unabhängig davon können aber auch beide Temperierelemente 1 und 2 eine separate Versorgung mit Kühlmittel besitzen, wobei diese so gesteuert oder geregelt werden, dass der über ihre Länge auftretende Temperaturgradient den gleichen Betrag aufweist. Der zu temperierende Körper wird auch hier entlang der Kontakt-Isothermen 4 wärmeleitend angebunden, wodurch sichergestellt wird, daß parallel zu den Temperierelementen 1 und 2 ein minimaler Temperaturgradient eingehalten wird. Senkrecht zur Kontakt-Isothermen 4 können dabei jedoch immer noch große Temperaturgradienten auftreten, z.B. zwischen den beiden Temperaturen T1 und T4.

Werden für dieses Ausführungsbeispiel beide Temperierelemente identisch ausgeführt, so hängt die Lage der Kontakt-Isotherme 4 nicht mehr von den Temperaturen T1 und T4 ab und wird somit stets symmetrisch in der Mitte der ersten Wärmebrücke 3 liegen, so dass diese Linie baulich zur Anbindung an den zu temperierenden Körper genutzt werden kann, ohne dass sich im Betrieb Verschiebungen der Kontakt-Isotherme 4 oder die Notwendigkeit von Regelungen oder Steuerungen ergeben.

Fig.6 zeigt die schematische Darstellung einer erfindungsgemässen Temperieranordnung im Querschnitt zur Erläuterung der erfindungsgemässen Verwirklichung der Homogenisierung der Temperatur senkrecht zur Isothermen durch Anbindung mittels einer zweiten Wärmebrücke 6'. Hierbei wird der zu temperierende Körper 5 und damit seine zu temperierende Oberfläche 5a mit der ersten Wärmebrücke 3' über eine zweite Wärmebrücke 6' wärmeleitend verbunden. Vorteilhafterweise sind hierbei die erste Wärmebrücke 3' und zweite Wärmebrücke 6' streifenförmig ausgebildet und die zweite Wärmebrücke 6' wird entlang ihrer Längsachse mit der ersten Wärmebrücke 3' verbunden, insbesondere entlang der Symmetrieachse der ersten Wärmebrücke 3' entlang derer sich bei identischen Temperaturgradienten in dem ersten Temperierelement 1' und dem zweiten Temperierelement 2' die Kontakt-Isotherme 4 ausbildet.

Bevorzugt werden die geometrischen Dimensionen hierbei so gewählt, dass der Quotient aus der Breite 7 der zweiten Wärmebrücke 6' und der Breite der ersten Wärmebrücke 3', gemessen in der Verbindungsachse zwischen erster Wärmebrücke 3' und zu temperierendem Körper 5, im wesentlichen dem Quotienten aus Temperaturdifferenz in der zweiten Wärmebrücke 6' zur lokalen Temperaturdifferenz zwischen den Temperierelementen 1' und 2' entspricht.

Die Breite dieser zweiten Wärmebrücke 6' hat einen Einfluß auf die Temperaturspreizung an der Oberfläche 5a des Körpers 5. Die Temperaturdifferenz quer zur zweiten Wärmebrücke 6' ist über die Breite 7 der zweiten Wärmebrücke Brücke in der Verbindungsachse zwischen erster Wärmebrücke 3' und zu temperierendem Körper 5 definiert. Da der Temperaturgradient innerhalb der zweiten Wärmebrücke 6' in erster Näherung linear verläuft, ergibt der Quotient Q1 der Breite von zweiter Wärmebrücke 6' zur Breite der ersten Wärmebrücke 3' in etwa den Quotienten der Temperaturdifferenz in der zweiten Wärmebrücke 6' zur Gesamtdifferenz von erstem Temperierelement 1' und zweitem Temperierelement 2'.

Auch die Ausdehnung der zweiten Wärmebrücke 6' Richtung der in der Verbindungsachse zwischen erster Wärmebrücke 3' und zu temperierendem Körper 5 hat einen Einfluß auf die Temperaturdifferenz, die an der Oberfläche 5a des Körpers 5 wirksam wird. Dies ist das Ergebnis des Ausgleichs der Temperaturdifferenz mit steigendem Abstand zur Quelle. Es läßt sich allgemein formulieren, daß der Quotient Q2 aus der Wärmeleitfähigkeit (= spez. Wärmeleitfähigkeit * Querschnitt / Strecke) quer zur Verbindungsachse zwischen erster Wärmebrücke 3' und zu temperierendem Körper 5 und der Wärmeleitfähigkeit in dieser Verbindungsachse den Grad der Homogenisierung definiert.

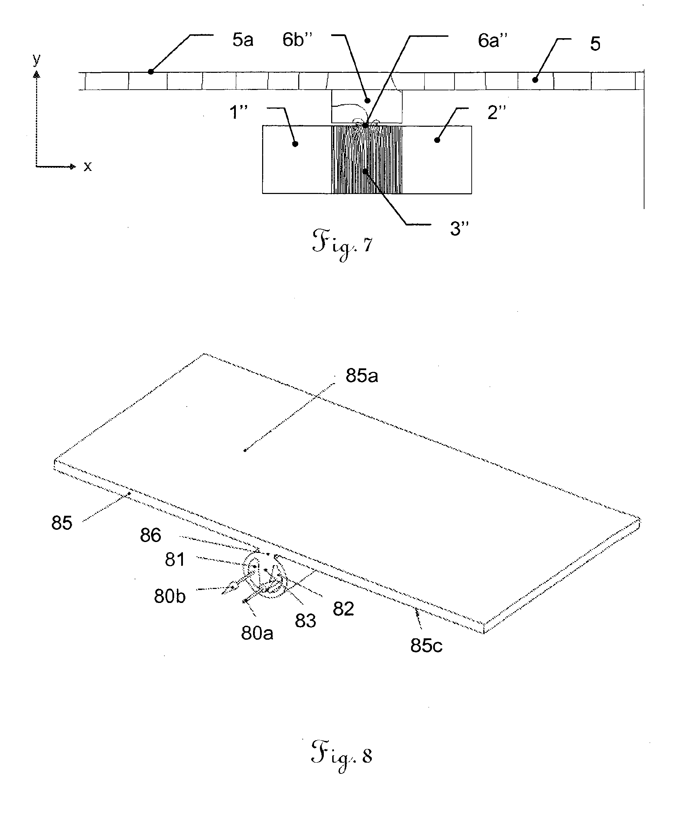

Eine weitere erfindungsgemässe Verwirklichung der Homogenisierung der Temperatur senkrecht zur Kontakt-Isothermen 4 bei anisotroper Wärmeleitung wird in Fig.7 die schematische dargestellt. Auch hierbei sind ein erstes Temperierelement 1'' und ein zweites Temperierelement 2'' durch eine erste Wärmebrücke 3'' untereinander verbunden und mittels einer zweiten Wärmebrücke an den Körper 5 mit seiner zu temperierenden Oberfläche 5a angebunden. Erfindungsgemäss kann die Wärmeleitfähigkeit der zweiten Wärmebrücke in der Verbindungsachse zwischen erster Wärmebrücke 3'' und zu temperierendem Körper 5 gegenüber der Wärmeleitfähigkeit in orthogonaler Richtung reduziert werden, insbesondere durch anisotrop wärmeleitende Werkstoffe und/oder - wie in diesem Beispiel - durch geometrische Ausgestaltung der zweiten Wärmebrücke. Diese wird in zwei Sektionen 6a'' und 6b'' mit in der Verbindungsachse zur ersten Wärmebrücke 3'' unterschiedlichen Querschnitten unterteilt. Hierbei ist der Querschnitt der die erste Wärmebrücke 3" unmittelbar kontaktierenden ersten Sektion 6a'' kleiner als der Querschnitt der in Folge angeordneten und den Körper 5 kontaktierenden zweiten Sektion 6b''. Diese Ausgestaltung verringert die totale Wärmeleitfähigkeit in Richtung der Verbindungsachse zwischen erster Wärmebrücke 3'' und zu temperierendem Körper 5 und erlaubt eine Reduktion der Ausdehnung der ersten Wärmebrücke 3" unter Beibehaltung von Q1. Neben solchen konstruktiv- geometrischen Maßnahmen kann eine hierfür geeignete anisotrope Wärmeleitfähigkeit aber auch alternativ oder ergänzend durch entsprechende Materialwahl (z.B. Graphit oder Kohlefaserverbundwerkstoffe) erreicht werden.

Fig.8 zeigt die figürliche Darstellung eines ersten Ausführungsbeispiels einer erfindungsgemässen Temperieranordnung zur Temperierung einer im wesentlichen ebenen Oberfläche 85a, die beispielsweise als Thermalwand die dem Testgut zugewandte Seite einer Wandung 85 in einer Weltraumsimulationsanlage darstellen kann. Das erste Temperierelement 81 und das zweite Temperierelement 82 mit der ersten Wärmebrücke 83 und der zweiten Wärmebrücke 86 können hierbei beispielsweise als Aluminiumstrangpreßprofil ausgeführt sein. Als Kühlmittel kann beispielsweise flüssiger oder gasförmiger, tiefkalter Stickstoff über einen Einlass 80a und einen Auslass 80b durch die Temperierelemente 81 und 82 geführt werden, wobei diese die in Fig.5 schematisch dargestellte Kühlmittelrückführung aufweisen. Zur Verringerung des Strahlungstransports können Oberflächen, wie z.B. die dem Testgut abgewandte Seite 85c der Wandung 85 speziell ausgestaltet sein, z.B. durch eine Verspiegelung. Zudem kann die Wärmeleitung durch weitere Massnahmen, wie z.B. die Wahl eines Füllmediums mit geringer Wärmeleitung oder Evakuierung weiter herabgesetzt werden.

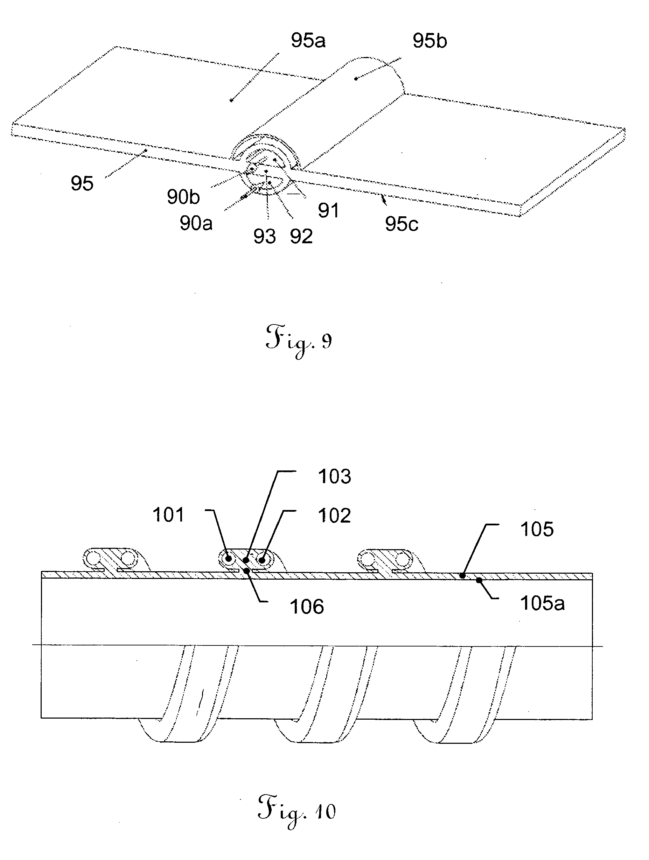

Ein zweites Ausführungsbeispiel mit einer weitgehenden Integration der erfindungsgemässen Temperieranordnung in eine Behälterwandung 95 wird in Fig.9 figürlich dargestellt. Auch hier sind das erste Temperierelement 91 und das zweite Temperierelement 92 durch eine erste Wärmebrücke 93 miteinander wärmeleitend verbunden. Im Unterschied zum ersten Ausführungsbeispiel wird hier jedoch diese erste Wärmebrücke 93 beidseitig weitergeführt, so dass diese direkt in die Behälterwandung 95 übergeht. Die beiden Temperierelemente sind somit in symmetrischer Ausgestaltung und Anbindung auf beiden Seiten des zu temperierenden Körpers angeordnet, so dass dieser mittig und unmittelbar mit der Kontakt-Isotherme verbunden ist.

Die Oberfläche 95a der Behälterwandung 95 wird nun in Form eines ausgewölbten Oberflächenabschnitts 95b über die integrierte Temperieranordnung geführt, so dass diese thermisch abgeschirmt ist und die Temperierung des ausgewölbten Oberflächenabschnitts 95b ausschliesslich über die Kontaktierung der übrigen Oberfläche 95a erfolgt.

Auch hier kann über einen Einlass 90a und einen Auslass 90b beispielsweise flüssiger oder gasförmiger, tiefkalter Stickstoff unter Kühlmittelrückführung durch die Temperierelemente 91 und 92 geführt werden.

Fig.10 zeigt die figürliche Darstellung einer Rohr- oder Behälterkühlung als drittes Ausführungsbeispiel einer erfindungsgemässen Temperieranordnung. Hier bilden ein erstes Temperierelement 101 und ein zweite Temperierelement 102 zusammen mit einer ersten Wärmebrücke 103 eine bandförmige Temperieranordnung, die helixförmig um die Aussenseite eines Rohres 105 gewickelt wird und entlang dieser Helix über einen Steg als zweiter Wärmebrücke 106 mit der Aussenseite des Rohres 105 wärmeleitend verbunden ist. Durch diese Temperieranordnung kann die Innenfläche 105a des Rohres 105 geheizt, gekühlt oder auf einer vorgegebenen Solltemperatur gehalten werden.

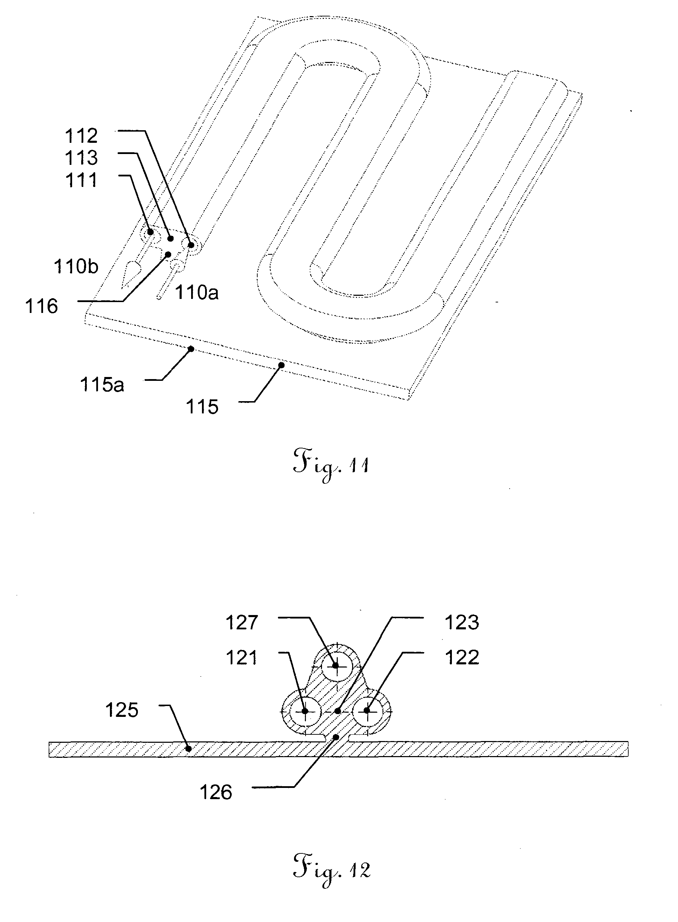

Als viertes Ausführungsbeispiel einer erfindungsgemässen Temperieranordnung erfolgt in Fig.11 die figürliche Darstellung eines Plattenkühlers. Auch hier bilden ein erstes Temperierelement 111 und ein zweite Temperierelement 112 zusammen mit einer ersten Wärmebrücke 113 eine bandförmige Temperieranordnung, die nun aber schlangenförmig auf der Aussenseite einer Platte 115 mit einer zu temperierenden Innenseite 115a geführt wird. Die kühlschlangenartige Temperieranordnung ist über einen Steg als zweiter Wärmebrücke 116 mit der Aussenseite der Platte 115 wärmeleitend verbunden, wobei Kühl- oder Heizmedien über einen Einlass 110a und einen Auslass 110b durch die kühlschlangenartige Temperieranordnung geführt werden können.

Das erfindungsgemässe Konzept kann auch durch weitere Temperierelemente bzw. Kühlkanäle ergänzt werden. So wird in Fig.12 die figürliche Darstellung eines fünften Ausführungsbeispiels einer erfindungsgemässen Temperieranordnung gezeigt, bei der die Anordnung aus erstem Temperierelement 121 und zweitem Temperierelement 122 sowie erster Wärmebrücke 123 und zweiter Wärmebrücke 126 durch eine drittes Temperierelement 127 ergänzt wird. Dieses dritte Temperierelement 127 wird parallel entlang der beiden anderen Temperierelemente 121 und 122 auf der dem zu temperierenden Körper 125 abgewandten Seite der Anordnung geführt. In diesem, hier als oberstes Rohr einer Anordnung aus Kühlrohren dargestellten, dritten Temperierelement 127 kann ein Medium mit inhomogenem Kühlverhalten geführt werden, z.B. als Verdampfer für Flüssigstickstoff. Dabei ist die Kühlleistung am Anfang des Rohres, d.h. am Punkt der Einspeisung von bspw. reinem Flüssigstickstoff, um ein Vielfaches höher als am Ende des somit als Verdampferrohr wirkenden dritten Temperierelementes 127. Die hierdurch bewirkte inhomogene Leistung fällt entlang der Kühlrohre an und wirkt auf die beiden anderen Temperierelemente 121 und 122 gleichermaßen. Als Ergebnis bildet sich auch in diesem Beispiel die erfindungsgemäss genutzte Isotherme aus. Durch diese Ergänzung der beiden Temperierelemente 121 und 122 um das dritte Temperierelement 127 kann eine hohe Wärmetransportleistung und hierdurch eine erfindungsgemäss Temperierwirkung auch bei höheren Wärmeaufnahmen des Körpers 125 gewährleistet werden. Dabei ist es nicht erforderlich, dass sich das dritte Temperierelement 127 über die gesamte Länge der Anordnung erstreckt. Vielmehr ist es möglich, durch gezielte, ggf. mehrfache Einspeisung an in thermischer Hinsicht kritischen Orten einen örtlich gesteigerten und somit hinsichtlich des Temperierverhaltens auch unter wechselnden Umwelt- oder Testbedingungen optimierten Wärmetransport zu realisieren.

**Patentansprüche**

1. Temperieranordnung zur Erzeugung eines gleichmäßigen Temperaturverlaufs auf einer Oberfläche (5a,85a,95a,105a,115a) mit

   - wenigstens zwei entlang einer Vorzugsrichtung ausgedehnten Temperierelementen (1,1',1",2,2',2",81, 91,101,111,82,92,102,112,121,122, 127) insbesondere Kanälen zur Führung von Kühl- oder Heizmedien,
   - einer die Temperierelemente (1,1',1",2,2',2",81,91,101,111,82,92,102,112,121,122, 127) entlang der Vorzugsrichtung verbindende erste Wärmebrücke (3,3',3",83,93,103,113,123),
   - einem die Oberfläche (5a,85a,95a,105a,115a) aufweisenden und zu temperierenden Körper (5,85,95,105,115,125),

   **dadurch gekennzeichnet, dass**
   die Temperierelemente (1,1',1",2,2',2",81,91,101,111,82,92,102,112,121,122, 127) so angeordnet und durch die erste Wärmebrücke (3,3',3",83,93,103,113,123) verbunden sind, dass sich im Betriebszustand eine Isotherme in Vorzugsrichtung entlang der ersten Wärmebrücke (3,3',3",83,93,103,113,123) als Kontakt-Isotherme (4) ausbildet, der zu temperierende Körper (5,85,95,105,115,125) mit der ersten Wärmebrücke (3,3,3",83,93,103,113,123) entlang der Kontakt-Isotherme (4) wärmeleitend verbunden ist, insbesondere kontinuierlich verbunden ist.

2. Temperieranordnung nach Anspruch 1,
   **dadurch gekennzeichnet, dass**
   der zu temperierende Körper (5,85,95,105,115,125) mit den Temperierelementen (1,1',1",2,2',2",81,91,101, 111,82,92,102,112,121,122, 127) ausschließlich entlang der Kontakt-Isotherme (4) der ersten Wärmebrücke (3,3',3",83,93,103,113,123) verbunden ist.

3. Temperieranordnung nach Anspruch 1 oder 2,
   **dadurch gekennzeichnet, dass**
   die Temperierelemente (1,1',1",2,2',2",81,91,101,111,82,92,102,112,121,122, 127) so angeordnet sind, dass die in den Temperierelementen (1,1',1",2,2',2",81,91,101,111,82,92,102,112,121,122, 127) im Betriebszustand entstehenden Temperaturgradienten antiparallel verlaufen.

4. Temperieranordnung nach einem der vorangehende Ansprüche,
   **dadurch gekennzeichnet, dass**
   der zu temperierende Körper (5,85,95,105,115,125) mit der ersten Wärmebrücke (3,3',3",83,93,103,113,123) über eine zweite Wärmebrücke (6',86,106,116,126) wärmeleitend verbunden ist.

5. Temperieranordnung nach Anspruch 4,
   **dadurch gekennzeichnet, dass**
   ersten Wärmebrücke (3,3',3",83,93,103,113,123) und/oder zweite Wärmebrücke (6',86,106,116,126) streifenförmig ausgebildet sind.

6. Temperieranordnung nach Anspruch 5,
   **dadurch gekennzeichnet, dass**
   die zweite Wärmebrücke (6',86,106,116,126) entlang ihrer Längsachse mit der ersten Wärmebrücke (3',3",83,103,113,123) verbunden ist, insbesondere entlang der Symmetrieachse der ersten Wärmebrücke (3,3',3",83, 93,103,113,123).

7. Temperieranordnung nach einem der Ansprüche 4-6,
   **dadurch gekennzeichnet, dass**
   die Wärmeleitfähigkeit der zweiten Wärmebrücke (6',86,106,116,126) in der Verbindungsachse zwischen erster Wärmebrücke (3,3',3",83,93,103,113,123) und zu temperierendem Körper (5,85,95,105,115,125) gegenüber der Wärmeleitfähigkeit in hierzu orthogonaler Richtung reduziert ist, insbesondere durch anisotrop wärmeleitende Werkstoffe und/oder durch geometrische Ausgestaltung der zweiten Wärmebrücke, vorzugsweise durch Teilung der zweiten Wärmebrücke in zwei Sektionen (6a",6b") mit in der Verbindungsachse zur ersten Wärmebrücke (3") unterschiedlichen Querschnitten.

8. Temperieranordnung nach einem der Ansprüche 4-7,
   **dadurch gekennzeichnet, dass**
   der Quotient aus den Breiten der zweite Wärmebrücke (6',86,106,116,126) und der ersten Wärmebrücke (3,3',3",83,93,103,113,123), gemessen in der Verbindungsachse zwischen erster Wärmebrücke (3,3',3",83,93,103,113,123) und zu temperierendem Körper (5,85,95,105,115,125), im wesentlichen dem Quotienten aus Temperaturdifferenz in der zweiten Wärmebrücke (6',86,106,116,126) zur lokalen Temperaturdifferenz zwischen den Temperierelementen (1,1',1",2,2',2",81,91,101,111,82,92,102,112,121,122, 127) entspricht.

9. Temperieranordnung nach einem der vorangehende Ansprüche, **dadurch gekennzeichnet, dass**
   die Temperierelemente (1,1',1",2,2',2",81,91,101,111,82,92,102,112,121,122, 127) zum Wärmetransport nach wenigstens einem der folgenden Prinzipien ausgebildet sind

   - Transport eines Kühl- oder Heizmediums, insbesondere eines fliessfähiges Mediums,
   - Transport durch elektrischen Strom,
   - Phasenumwandlung,
   - endo- oder exotherme chemische Reaktion.

**10.** Temperieranordnung nach einem der vorangehende Ansprüche,
**dadurch gekennzeichnet, dass**
die Temperierelemente (1,1',1",2,2',2",81,91,101,111,82,92,102,112,121,122, 127) so gesteuert oder geregelt werden, dass der über ihre Länge auftretende Temperaturgradient den gleichen Betrag aufweist.

**11.** Temperieranordnung nach einem der vorangehende Ansprüche,
**dadurch gekennzeichnet, dass**
die Temperierelemente (1,1',1",2,2',2",81,91,101,111,82,92,102,112,121,122, 127) miteinander verbunden sind und einen gemeinsamen, aufeinanderfolgend durch beide Temperierelemente (1,1',1",2,2',2",81,91,101,111,82, 92,102,112,121,122, 127) geführten Wärmestrom aufweisen.

**12.** Temperierverfahren zur Erzeugung eines gleichmäßigen Temperaturverlaufs auf einer Oberfläche (5a,85a,95a,105a,115a) mit

- wenigstens zwei entlang einer Vorzugsrichtung ausgedehnten Temperierelementen (1,1',1",2,2',2",81,91,101,111,82,92,102,112,121,122, 127),
- einer die Temperierelemente (1,1',1",2,2',2",81,91,101,111,82,92,102,112,121,122, 127) entlang der Vorzugsrichtung verbindende erste Wärmebrücke,
- einem die Oberfläche (5a,85a,95a,105a,115a) aufweisenden und zu temperierenden Körper (5,85,95,105,115,125), wobei der zu temperierende Körper (5,85,95,105,115,125) mit der ersten Wärmebrücke (3,3',3",83,93,103,113,123) entlang einer Verbindungslinie wärmeleitend verbunden ist und einem
- Erzeugen eines Wärmestromes in den Temperierelementen,

**dadurch gekennzeichnet, dass**
das Erzeugen des Wärmestromes so erfolgt, dass sich entlang der Verbindungslinie eine Isotherme als Kontakt-Isotherme (4) ausbildet.

**13.** Temperierverfahren nach Anspruch 12,
**dadurch gekennzeichnet, dass**
das Erzeugen des Wärmestromes so erfolgt, dass die in den Temperierelementen (1,1',1",2,2',2",81,91,101, 111,82,92,102,112,121,122, 127) entstehenden Temperaturgradienten antiparallel verlaufen.

**14.** Temperierverfahren nach Anspruch 12 oder 13,
**dadurch gekennzeichnet, dass**
das Erzeugen des Wärmestromes so erfolgt, dass der über die Länge der Temperierelemente (1,1',1",2,2',2",81,91,101,111,82,92,102,112,121,122, 127) auftretende Temperaturgradient den gleichen Betrag aufweist.

**15.** Temperierverfahren nach einem der Ansprüche 12 bis 14, **dadurch gekennzeichnet, dass**
das Erzeugen des Wärmestromes so erfolgt, dass der Quotient aus den Breiten einer zweiten Wärmebrücke (6',86,106,116,126) und der ersten Wärmebrücke (3,3',3",83,93,103,113,123), gemessen in der Verbindungsachse zwischen erster Wärmebrücke (3,3',3",83,93,103,113,123) und zu temperierendem Körper (5,85,95,105,115), im wesentlichen dem Quotienten aus Temperaturdifferenz in der zweiten Wärmebrücke (6',86,106,116,126) zur lokalen Temperaturdifferenz zwischen den Temperierelementen (1,1',1",2,2',2",81,91,101,111,82,92,102,112,121,122, 127) entspricht, wobei der zu temperierende Körper (5,85,95,105,115) mit der ersten Wärmebrücke (3,3',3",83,93,103,113,123) über die zweite Wärmebrücke (6',86,106,116,126) wärmeleitend verbunden ist.

**Claims**

**1.** Temperature-control assembly for producing a uniform temperature profile on a surface (5a, 85a, 95a, 105a, 115a), comprising

- at least two temperature-control elements (1, 1', 1", 2, 2', 2", 81, 91, 101, 111, 82, 92, 102, 112, 121, 122, 127), in particular channels for carrying cooling or heating media, extended along a preferential direction,
- a first thermal bridge (3, 3', 3", 83, 93, 103, 113, 123) connecting the temperature-control elements (1, 1', 1", 2, 2', 2", 81, 91, 101, 111, 82, 92, 102, 112, 121, 122, 127) along the preferential direction,
- a body (5, 85, 95, 105, 115, 125) which has the surface (5a, 85a, 95a, 105a, 115a) and the temperature of which is to be controlled,

**characterized in that**
the temperature-control elements (1, 1', 1", 2, 2', 2", 81, 91, 101, 111, 82, 92, 102, 112, 121, 122, 127) are arranged and connected by the first thermal bridge (3, 3', 3", 83, 93, 103, 113, 123) in such a way that in the operating state an isotherm forms in the preferential direction along the first thermal bridge (3, 3', 3", 83, 93, 103, 113, 123) as a contact isotherm (4),
the body (5, 85, 95, 105, 115, 125) of which the temperature is to be controlled is connected, in particular continuously connected, in a heat-conducting manner to the first thermal bridge (3, 3', 3", 83, 93, 103, 113, 123) along the contact isotherm (4).

2. Temperature-control assembly according to Claim 1,
   **characterized in that**
   the body (5, 85, 95, 105, 115, 125) of which the temperature is to be controlled is connected to the temperature-control elements (1, 1', 1", 2, 2', 2", 81, 91, 101, 111, 82, 92, 102, 112, 121, 122, 127) exclusively along the contact isotherm (4) of the first thermal bridge (3, 3', 3", 83, 93, 103, 113, 123).

3. Temperature-control assembly according to Claim 1 or 2,
   **characterized in that**
   the temperature-control elements (1, 1', 1", 2, 2', 2", 81, 91, 101, 111, 82, 92, 102, 112, 121, 122, 127) are arranged in such a way that the temperature gradients produced in the operating state in the temperature-control elements (1, 1', 1", 2, 2', 2", 81, 91, 101, 111, 82, 92, 102, 112, 121, 122, 127) run anti-parallel.

4. Temperature-control assembly according to any one of the preceding claims,
   **characterized in that**
   the body (5, 85, 95, 105, 115, 125) of which the temperature is to be controlled is connected in a heat-conducting manner to the first thermal bridge (3, 3', 3", 83, 93, 103, 113, 123) by way of a second thermal bridge (6', 86, 106, 116, 126).

5. Temperature-control assembly according to Claim 4,
   **characterized in that**
   the first thermal bridge (3, 3', 3", 83, 93, 103, 113, 123) and/or the second thermal bridge (6', 86, 106, 116, 126) are provided in the form of strips.

6. Temperature-control assembly according to Claim 5,
   **characterized in that**
   the second thermal bridge (6', 86, 106, 116, 126) is connected along its longitudinal axis to the first thermal bridge (3', 3", 83, 103, 113, 123), in particular along the axis of symmetry of the first thermal bridge (3, 3', 3", 83, 93, 103, 113, 123).

7. Temperature-control assembly according to any one of Claims 4-6,
   **characterized in that**
   the thermal conductivity of the second thermal bridge (6', 86, 106, 116, 126) in the connecting axis between the first thermal bridge (3, 3', 3", 83, 93, 103, 113, 123) and the body (5, 85, 95, 105, 115, 125) of which the temperature is to be controlled is reduced in comparison with the thermal conductivity in the direction orthogonal thereto, in particular by anisotropically heat-conducting materials and/or by geometrical design of the second thermal bridge, preferably by dividing the second thermal bridge into two sections (6a", 6b") with different cross sections in the connecting axis with respect to the first thermal bridge (3").

8. Temperature-control assembly according to any one of Claims 4-7,
   **characterized in that**
   the quotient of the widths of the second thermal bridge (6', 86, 106, 116, 126) and the first thermal bridge (3, 3', 3", 83, 93, 103, 113, 123), measured in the connecting axis between the first thermal bridge (3, 3', 3", 83, 93, 103, 113, 123) and the body (5, 85, 95, 105, 115, 125) of which the temperature is to be controlled, corresponds substantially to the quotient of the temperature difference in the second thermal bridge (6', 86, 106, 116, 126) in relation to the local temperature difference between the temperature-control elements (1, 1', 1", 2, 2', 2", 81, 91, 101, 111, 82, 92, 102, 112, 121, 122, 127).

9. Temperature-control assembly according to any one of the preceding claims, **characterized in that** the temperature-control elements (1, 1', 1", 2, 2', 2", 81, 91, 101, 111, 82, 92, 102, 112, 121, 122, 127) are designed for transporting heat on the basis of at least one of the following principles

- transporting a cooling or heating medium, in particular a flowable medium,
- transporting by electrical current,
- phase transformation,
- endothermic or exothermic chemical reaction.

10. Temperature-control assembly according to any one of the preceding claims,
**characterized in that**
the temperature-control elements (1, 1', 1", 2, 2', 2", 81, 91, 101, 111, 82, 92, 102, 112, 121, 122, 127) are controlled or regulated in such a way that the temperature gradient occurring over their length has the same amount.

11. Temperature-control assembly according to any one of the preceding claims,
**characterized in that**
the temperature-control elements (1, 1', 1", 2, 2', 2", 81, 91, 101, 111, 82, 92, 102, 112, 121, 122, 127) are connected to one another and have a common flow of heat that is carried successively through both temperature-control elements (1, 1', 1", 2, 2', 2", 81, 91, 101, 111, 82, 92, 102, 112, 121, 122, 127).

12. Temperature-control method for producing a uniform temperature profile on a surface (5a, 85a, 95a, 105a, 115a), comprising

- at least two temperature-control elements (1, 1', 1", 2, 2', 2", 81, 91, 101, 111, 82, 92, 102, 112, 121, 122, 127) extended along a preferential direction,
- a first thermal bridge connecting the temperature-control elements (1, 1', 1", 2, 2', 2", 81, 91, 101, 111, 82, 92, 102, 112, 121, 122, 127) along the preferential direction,
- a body (5, 85, 95, 105, 115, 145) which has the surface (5a, 85a, 95a, 105a, 115a) and the temperature of which is to be controlled, wherein the body (5, 85, 95, 105, 115, 125) of which the temperature is to be controlled is connected in a heat-conducting manner along a connecting line to the first thermal bridge (3, 3', 3", 83, 93, 103, 113, 123)
and
- producing a flow of heat in the temperature-control elements,

**characterized in that**
the flow of heat is produced in such a way that an isotherm forms along the connecting line as a contact isotherm (4).

13. Temperature-control method according to Claim 12,
**characterized in that**
the flow of heat is produced in such a way that the temperature gradients produced in the temperature-control elements (1, 1', 1", 2, 2', 2", 81, 91, 101, 111, 82, 92, 102, 112, 121, 122, 127) run anti-parallel.

14. Temperature-control method according to Claim 12 or 13,
**characterized in that**
the flow of heat is produced in such a way that the temperature gradient occurring over the length of the temperature-control elements (1, 1', 1", 2, 2', 2", 81, 91, 101, 111, 82, 92, 102, 112, 121, 122, 127) has the same amount.

15. Temperature-control method according to any one of Claims 12 to 14,
**characterized in that**
the flow of heat is produced in such a way that the quotient of the widths of a second thermal bridge (6', 86, 106, 116, 126) and the first thermal bridge (3, 3', 3", 83, 93, 103, 113, 123), measured in the connecting axis between the first thermal bridge (3, 3', 3", 83, 93, 103, 113, 123) and the body (5, 85, 95, 105, 115) of which the temperature is to be controlled, corresponds substantially to the quotient of the temperature difference in the second thermal bridge (6', 86, 106, 116, 126) in relation to the local temperature difference between the temperature-control elements (1, 1', 1", 2, 2', 2", 81, 91, 101, 111, 82, 92, 102, 112, 121, 122, 127), wherein the body (5, 85, 95, 105, 115) of which the temperature is to be controlled is connected in a heat-conducting manner to the first thermal bridge (3, 3', 3", 83, 93, 103, 113, 123) by way of the second thermal bridge (6', 86, 106, 116, 126).

**Revendications**

1. Dispositif de thermorégulation pour produire une courbe de température uniforme sur une surface (5a, 85a, 95a, 105a, 115a) avec

   - au moins deux éléments de thermorégulation (1, 1', 1", 2, 2', 2", 81, 91 ,101, 111, 82, 92, 102, 112, 121, 122, 127) étendus le long d'une direction préférentielle, en particulier des canaux pour la conduction d'agents de refroidissement ou de chauffage,
   - un premier pont thermique (3, 3', 3", 83, 93, 103, 113, 123) qui relie les éléments de thermorégulation (1,1', 1", 2, 2', 2", 81, 91, 101, 111, 82, 92, 102, 112, 121, 122, 127) le long de la direction préférentielle,
   - un corps à tempérer (5, 85, 95, 105, 115, 125) et qui présente la surface (5a, 85a, 95a, 105a, 115a),

   **caractérisé en ce que** les éléments de thermorégulation (1, 1', 1", 2,2',2", 81, 91, 101, 111, 82, 92, 102, 112, 121, 122, 127) sont placés et sont reliés par le premier pont thermique (3, 3', 3", 83, 93, 103, 113, 123) de telle manière qu'il se forme, en état de fonctionnement, une isotherme en tant qu'isotherme de contact (4) dans la direction préférentielle le long du premier pont thermique (3, 3', 3", 83, 93, 103, 113, 123), le corps à tempérer (5, 85, 95, 105, 115, 125) est relié de manière thermoconductrice au premier pont thermique (3, 3', 3", 83, 93, 103, 113, 123) le long de l'isotherme de contact (4), en particulier qu'il est relié de manière continue.

2. Dispositif de thermorégulation selon la revendication 1, **caractérisé en ce que** le corps à tempérer (5, 85, 95, 105, 115, 125) est relié aux éléments de thermorégulation (1, 1', 1", 2, 2', 2", 81, 91, 101, 111, 82, 92, 102, 112, 121, 122, 127) uniquement le long de l'isotherme de contact (4) du premier pont thermique (3, 3', 3", 83, 93, 103, 113, 123).

3. Dispositif de thermorégulation selon la revendication 1 ou 2, **caractérisé en ce que** les éléments de thermorégulation (1, 1', 1", 2, 2', 2", 81, 91, 101, 111, 82, 92, 102, 112, 121, 122, 127) sont placés de telle manière que les gradients de température qui se forment en état de fonctionnement dans les éléments de thermorégulation (1, 1', 1", 2, 2', 2", 81, 91, 101, 111, 82, 92, 102, 112, 121, 122, 127) sont antiparallèles.

4. Dispositif de thermorégulation selon l'une des revendications précédentes, **caractérisé en ce que** le corps à tempérer (5, 85, 95, 105, 115, 125) est relié de manière thermoconductrice au premier pont thermique (3, 3', 3", 83, 93, 103, 113, 123) par un second pont thermique (6', 86, 106, 116, 126).

5. Dispositif de thermorégulation selon la revendication 4, **caractérisé en ce que** le premier pont thermique (3, 3', 3", 83, 93, 103, 113, 123) et/ou le second pont thermique (6', 86, 106, 116, 126) sont configurés en forme de bande.

6. Dispositif de thermorégulation selon la revendication 5, **caractérisé en ce que** le second pont thermique (6', 86, 106, 116, 126) est relié le long de son axe longitudinal au premier pont thermique (3, 3', 3", 83, 93, 103, 113, 123), en particulier le long de l'axe de symétrie du premier pont thermique (3, 3', 3", 83, 93, 103, 113, 123).

7. Dispositif de thermorégulation selon l'une des revendications 4 à 6, **caractérisé en ce que** la conductivité thermique du second pont thermique (6', 86, 106, 116, 126) est réduite dans l'axe de liaison entre le premier pont thermique (3, 3', 3", 83, 93, 103, 113, 123) et le corps à tempérer (5, 85, 95, 105, 115, 125) par rapport à la conductivité thermique dans la direction orthogonale par rapport à cet axe, en particulier par des matériaux thermoconducteurs anisotropes et/ou par la configuration géométrique du second pont thermique, de préférence par division du second pont thermique en deux sections (6a", 6b") avec différentes sections dans l'axe de liaison avec le premier pont thermique (3").

8. Dispositif de thermorégulation selon l'une des revendications 4 à 7, **caractérisé en ce que** le quotient des largeurs du second pont thermique (6', 86, 106, 116, 126) et du premier pont thermique (3, 3', 3", 83, 93, 103, 113, 123) mesuré dans l'axe de liaison entre le premier pont thermique (3, 3', 3", 83, 93, 103, 113, 123) et le corps à tempérer (5, 85, 95, 105, 115, 125) correspond substantiellement au quotient de la différence de température dans le second pont thermique (6', 86,106, 116, 126) par rapport à la différence de température locale entre les éléments de thermorégulation (1, 1', 1", 2, 2', 2", 81, 91, 101, 111, 82, 92, 102, 112, 121, 122, 127).

9. Dispositif de thermorégulation selon l'une des revendications précédentes, **caractérisé en ce que** les éléments de thermorégulation (1, 1', 1", 2, 2', 2", 81, 91, 101, 111, 82, 92, 102, 112, 121, 122, 127) sont configurés pour le transport de chaleur selon au moins l'un des principes suivants :

- transport d'un agent de refroidissement ou de chauffage, en particulier d'un milieu fluide,
- transport par courant électrique,
- conversion de phase,
- réaction chimique endothermique ou exothermique.

**10.** Dispositif de thermorégulation selon l'une des revendications précédentes, **caractérisé en ce que** les éléments de thermorégulation (1, 1', 1", 2, 2', 2", 81, 91, 101, 111, 82, 92, 102, 112, 121, 122, 127) sont commandés ou réglés de telle manière que le gradient de température qui intervient sur leur longueur présente la même valeur.

**11.** Dispositif de thermorégulation selon l'une des revendications précédentes, **caractérisé en ce que** les éléments de thermorégulation (1, 1', 1", 2, 2', 2", 81, 91, 101, 111, 82, 92, 102, 112, 121, "122, 127) sont reliés l'un à l'autre et présentent un flux thermique commun, conduit successivement par deux éléments de thermorégulation (1, 1', 1", 2, 2', 2", 81, 91, 101, 111, 82, 92, 102, 112, 121, 122, 127).

**12.** Procédé de thermorégulation pour produire une courbe de température uniforme sur une surface (5a, 85a, 95a, 105a, 115a) avec

- au moins deux éléments de thermorégulation (1, 1', 1", 2, 2', 2", 81, 91, 101, 111, 82, 92, 102, 112, 121, 122, 127) étendus le long d'une direction préférentielle,
- un premier pont thermique (3, 3', 3", 83, 93, 103, 113, 123) qui relie les éléments de thermorégulation (1, 1', 1 ", 2, 2', 2", 81, 91, 101, 111, 82, 92, 102, 112, 121, 122, 127) le long de la direction préférentielle,
- un corps à tempérer (5, 85, 95, 105, 115, 125) et qui présente la surface (5a, 85a, 95a, 105a, 115a), le corps à tempérer (5, 85, 95, 105, 115, 125) étant relié de manière thermoconductrice au premier pont thermique (3, 3', 3", 83, 93, 103, 113, 123) le long d'une ligne de liaison et une
- production de flux thermique dans les éléments de thermorégulation, **caractérisé en ce que** la production du flux thermique se fait de telle manière qu'il se forme une isotherme en tant qu'isotherme de contact (4) le long de la ligne de liaison.

**13.** Procédé de thermorégulation selon la revendication 12, **caractérisé en ce que** la production du flux thermique se fait de manière telle que les gradients de température qui se forment en état de fonctionnement dans les éléments de thermorégulation (1, 1', 1", 2, 2', 2", 81, 91, 101, 111, 82, 92, 102, 112, 121, 122, 127) sont antiparallèles.

**14.** Procédé de thermorégulation selon la revendication 12 ou 13, **caractérisé en ce que** la production du flux thermique se fait de manière telle que le gradient de température qui intervient sur la longueur des éléments de thermorégulation (1, 1', 1", 2, 2', 2", 81, 91, 101, 111, 82, 92, 102, 112, 121, 122, 127) présente la même valeur.

**15.** Procédé de thermorégulation selon l'une des revendications 12 à 14, **caractérisé en ce que** la production du flux thermique se fait de manière telle que le quotient des largeurs du second pont thermique (6', 86, 106, 116, 126) et du premier pont thermique (3, 3', 3", 83, 93, 103, 113, 123) mesuré dans l'axe de liaison entre le premier pont thermique (3, 3', 3", 83, 93, 103, 113, 123) et le corps à tempérer (5, 85, 95, 105, 115, 125) correspond substantiellement au quotient de la différence de température dans le second pont thermique (6', 86,106, 116, 126) par rapport à la différence de température locale entre les éléments de thermorégulation (1, 1', 1", 2, 2', 2", 81, 91, 101, 111, 82, 92, 102, 112, 121, 122, 127), le corps à tempérer (5, 85, 95, 105, 115, 125) étant relié de manière thermoconductrice au premier pont thermique (3, 3', 3", 83, 93, 103, 113, 123) par le second pont thermique (6', 86, 106, 116, 126).

Fig. 1

Fig. 2

Fig. 3

Fig. 4

Fig. 5

Fig. 6

y

5a    6b"      6a"      5

x

1"       2"

3"

*Fig. 7*

85a

85

86

81

80b

80a   83   82

85c

*Fig. 8*

16

Fig. 9

Fig. 10

112
113
111

110b

116

110a

115a

115

*Fig. 11*

127        123
121        122

125

126

*Fig. 12*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DD 241864